# EUROPEAN PATENT SPECIFICATION

(11) **EP 1 992 525 B1**
(45) Date of publication and mention of the grant of the patent: **26.06.2013**
(21) Application number: 07108163.2
(22) Date of filing: 14.05.2007
(51) Int. Cl.: B60R 19/34, B60R 19/52, B60R 21/34

(54) **The mounting bracket for frontal protection system**
Die Montage - Haltewinkel für frontales Schutzsystem
Le support - parenthese pour le systeme de protection frontal

(43) Date of publication of application: 19.11.2008
(73) Proprietor: Tarmetec OÜ, 51013 Tartu (EE)
(72) Inventor: Mõtlik, Roland, 50111 Tartu (EE); Eerme, Martin, 76505 Saue, Harjumaa (EE); Järvala, Jan, Tartu, Tartumaa 60505 (EE)
(74) Representative: Sarap, Margus

(56) References cited:
- EP-A- 1 859 983
- WO-A-03/024747
- US-A1- 2005 099 028
- US-A1- 2005 253 403

## Description

### Technical Field

The present invention relates to a fixing element or mounting element for frontal protection system, particularly energy absorbing bracket for frontal protection system to reduce pedestrian impact injuries in accidents caused by vehicles with frontal protection system mounted on.

### Background Art

In recent years there are made a lot of improvements in different parts of cars and other vehicles to reduce pedestrian injuries and damages of vehicles also. Well known are different arrangements or fittings on vehicles for protecting or preventing injuries to pedestrians in case of accidents, for example different energy or shock absorbing solutions for bumpers (foam or air filled energy absorbers or plastic beams, etc). Less common are other solutions like arrangements for mounting bumpers, but in particular for mounting grill guards.

Well-known solutions to mount grill guard to vehicle are usual rigid steel brackets and/or bolts, which doesn't protect pedestrians in accidents at all. The closest solutions to present inventions are described in following documents.

US 5909920 A (TELESTRA CORP LTD) 8.06.1999 describes an energy absorbing vehicle bodywork connection including S-shaped load securing bracket.

JP 2001260902 A (KOYO SEIKO CO) 26.09.2001 discloses the structure to ensure the moving stroke length for shock absorption, and save the installation space in an energy absorption steering device. When shock is applied, the projection is moved along the extending part together with the relative movement of the steering column to plastically bending-deform. Since the extending part for requiring the moving stroke length is fixed, an installation space is saved as compared with the movement of the extending part in the same stroke length.

EP 0987148 A (RUMPP GERHARD) 22.03.2000 describes a vehicle front protection guard (frontal protection system) with a connecting device for connecting the front protection guard with a body part of a vehicle and an absorption device for absorbing the movement of the front protection guard in relation to the body part in the case of an impact with an impact object.

WO 03/024747A discloses a bracket according to the preamble of claim 1.

### Disclosure of Invention

The present invention refers to a frontal protection system which comprises a separate structure or structures, such as a bull bar or a supplementary bumper, which is intended to protect the external surface of the vehicle, above and/or below the original equipment bumper, from damages in the event of a collision with an object for example pedestrian or animal and to a connecting device for connecting the frontal protection system with a body part of a motor vehicle which is at the same time is an absorption device for absorbing the movement of the frontal protection system in relation to the body part in the case of an impact with an impact object for example with pedestrian or animal.

As is common knowledge, a frontal protection system for vehicles, especially for land-rovers, is as protection of the frontal portion of the vehicle against branches, rock projections/leads and against other articles projecting into the drive with the employment of the vehicle in the area. The lights within the frontal range as well as the radiator grille with the schnorkel are to be protected by the frontal protection system in particular to the engine compartment effectively with rough area enterprise. In addition the frontal protection system from a rigid tubing rack or a plastic part with reinforcement mechanism is formed, which is fastened to the vehicle body. The vehicles with frontal protection system for example with bull bar are used however not only in the terrain, but also on public roads. The injury risk for persons, who are seized by the vehicle, especially by land-rover, in particular its frontal protection system, is however much higher, than with passenger cars. There is also very important issue related to the absorbing the impact energy into the vehicle construction.

The present invention proposes to create a simply developed bracket for connecting the frontal protection system for motor vehicles with the vehicle body to decrease the injury risk for persons seized by the vehicle. This problem will be solved by technical solution according the invention described in the first independent claim.

### Brief Description of Figures in the Drawings

Other technical solutions and embodiments are described in the dependent claims and in the following detailed description with references to the accompanying drawings where

FIG. 1 shows a perspective view of an example of a mounting bracket

FIG. 2 shows a perspective view of the example show in fig 1 whereby the deformation part has alternative construction,

FIG. 3 shows a perspective view of the another example whereby the mounting bracket comprises an additional absorbing element,

FIG. 4 shows a perspective view of the preferred embodiment of the present invention

FIG. 9a to 9f show a different constructions of the hole for fixing means used in the embodiments of the present invention shown in FIG 4,

FIG. 10 and FIG. 11 shows the different possibilities for connecting the mounting bracket according to the invention with the protection system and vehicle body via connecting holder,

FIG. 12 and FIG. 13 illustrate the arrangement of the mounting bracket according to the invention in relation of the vehicle body and protection system.

### Mode(s) for Carrying Out the Invention

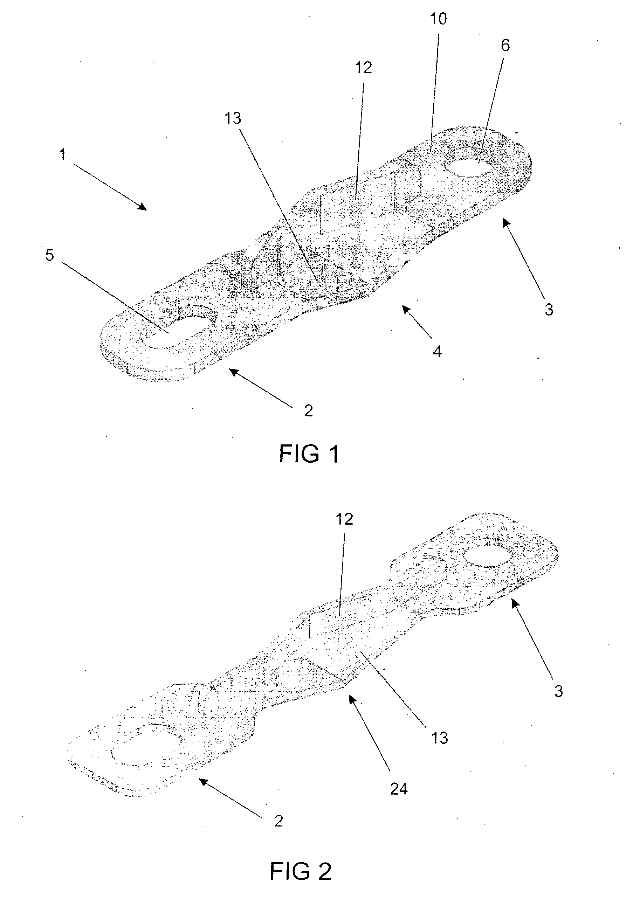

In Fig. 1 is shown a mounting bracket 1 for fastening the upper part of the frontal protection system (for example bull bar) to the vehicle body.

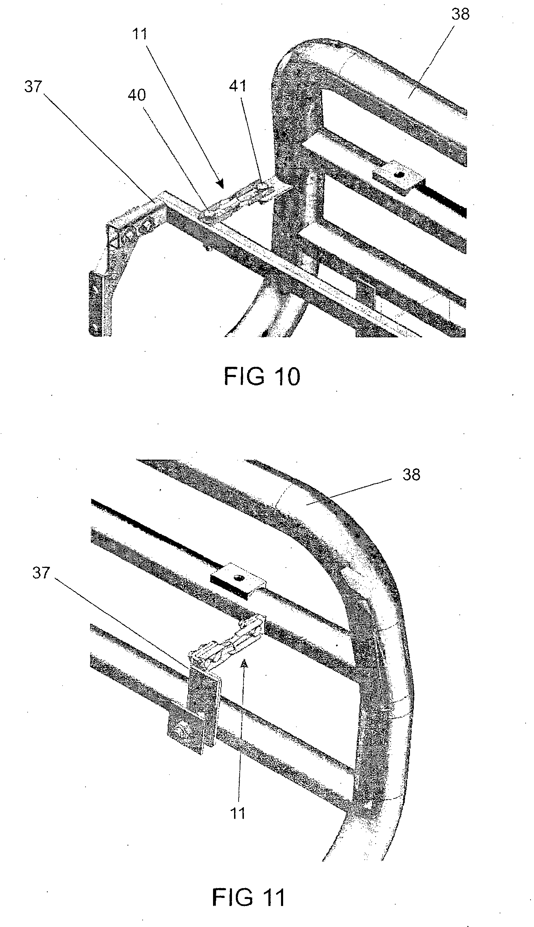

The mounting bracket 1 comprises from the three portions: two fastening portions 2 and 3, and the absorbing portion 4 extending between the fastening portions 2, 3. In the fastening part 2 arranged in the part of the bracket in side of protection system is formed at least one opening 5 for fixing elements 40, 41 (shown in Fig. 10) for connecting the bracket to the frontal protection system.

In the fastening part 3 arranged in the part of the bracket in side of vehicle body is formed at least one opening 6 for the fixing elements for connecting the mounting bracket 1 with the vehicle body or with connecting holder, which is fixed to the vehicle body rigidly. In the example showed in the Fig. 1 the absorbing portion 4 is formed at least with two elements, a lower deforming element 13 and the upper deforming element 12 both extending between the fastening portions 2, 3, whereas the upper deforming element 12 is perpendicular with the plane of the lower deforming element 13 and with the fastening portions 2, 3 respectively. The upper deforming element 12 and the lower deforming element 13 are inclined from the centre so that the obtuse-angled V-shape is formed, whereas the lower deforming element 13 is inclined outwardly in direction away from the upper deforming element 12. Such configuration enables for the deforming elements 12, 13 to become deformed in different direction if the accident occur with the vehicle and the impediments for example pedestrian.

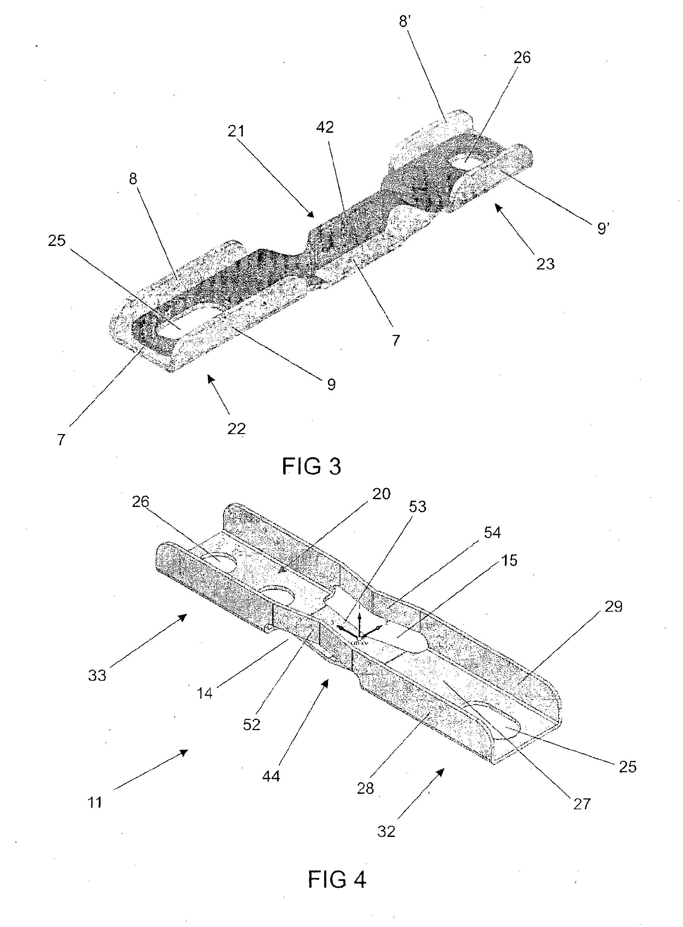

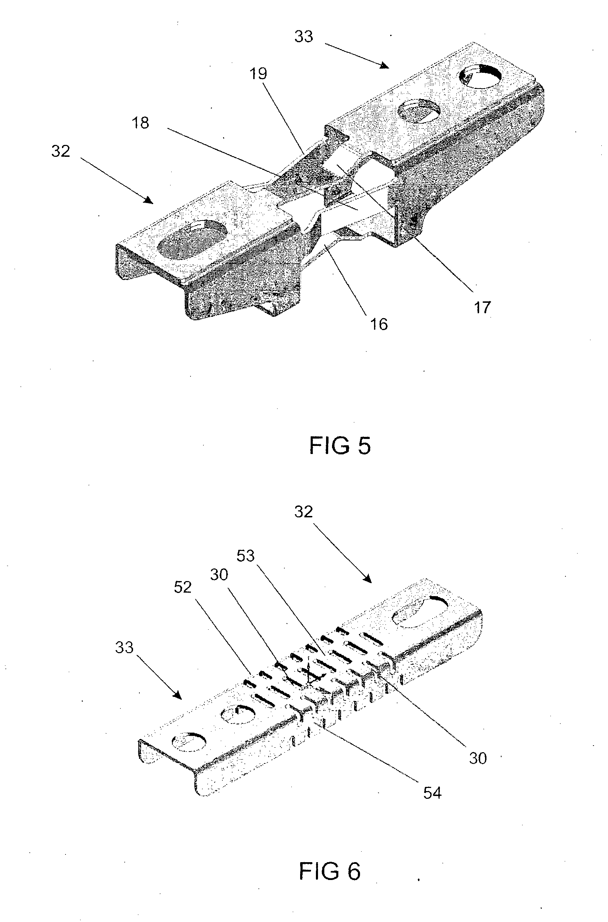

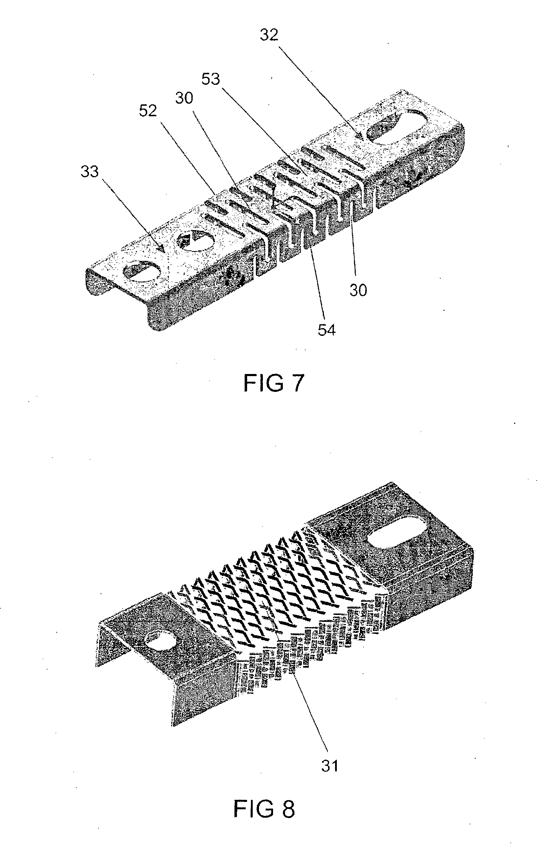

In the other example shown in the Fig. 3 the mounting bracket further comprises the absorbing element 21 and the fastening portions 22, 23 are formed in the form of the U-shaped body. The fastening portions comprise the bracket base 7 and the bracket sidewalls 8, 9, 8', 9' extending upwardly from said bracket base 7, whereby the bracket sidewalls are substantially perpendicular with the plane of the bracket base 7. The absorbing element 21 is provided with the openings 25, 26 in the both ends for fixing elements, whereas the openings 25, 26 coincide with the corresponding openings 5, 6 in the fastening portions 22, 23. The absorbing element 21 comprises the deforming element 42 formed in the middle of the absorbing element 21, the deforming element 42 is turned substantially 90 ° in relation with the both ends of the absorbing element 21 so that is arranged perpendicular with the plane of the bracket base 7. Where connecting the mounting bracket with the frontal protection system and vehicle body the absorbing element 21 is arranged between the bracket sidewalls 8, 9, 8', 9' formed in ends of the fastening portions 22, 23.

In the Fig. 2 is showed the modified example of Fig. 1 where the middle deforming element of the absorbing portion 4 is formed narrow than the fastening portions of the mounting bracket. Similarly to the bracket shown in the Fig 1 the mounting bracket is cut out from the metal sheet so that the width of the deforming element inclined from the plane of the bracket is narrow compared to the width of the fastening portions, a narrow neck portion is formed. The perpendicular deforming element is attached to the fastening portions and is inclined from the centre so that the obtuse-angled V-shape is formed.

In the Fig 4 is shown the preferred embodiment of the mounting bracket according to present invention. The mounting bracket 11 comprises the bracket body 20 comprising the bracket base 27 and bracket sidewalls 28, 29 extending upwardly from said bracket base 27 and formed along the whole extent of the mounting bracket 11 length, whereas the sidewalls 28, 29 are perpendicular with the bracket base 27 to form U-shape body 20. The absorbing portion 44 comprises at least from the three elements - the lower deforming element 53 and two lateral deforming elements 52, 54 extending between the fastening portions 32, 33 and formed by cut-outs 14, 15 in the bracket sidewalls 28, 29 in production process.

To provide that the deforming elements will become deformed in predetermined direction the deforming element 53 is inclined from the centre outwardly from the bracket in relation to the plane of the bracket base 27 and the lateral deforming elements 52, 54 are inclined from the centre inwardly in relation of the bracket sidewalls 28, 29. In addition the other inclination maybe provided such as the deforming element 53 is inclined inwardly and the lateral deforming elements 52, 54 are inclined inwardly respectively. The prescribed inclinations of the central point of the deforming elements provides that during the impact for example the central point of the lower deforming element 53 moves out from the bracket body and the central points of the lateral deforming elements are moving in side the bracket body. Also in other embodiments according to the present invention the inclination point or line can be shifted from the centre of the deforming element.

The cut-outs 14, 15 are extending from the bending angle of the mounting bracket 1 in direction to the central line of the bracket base 27 and in the direction to the upper edge of the sidewalls 28, 29 of the bracket 11. The width of the deforming elements 52, 53, 54 will be dimensioned according to the safety requirements introduced for the frontal protection system and the elements connecting the protection system with the vehicle body to enable absorb the energy of the forces caused by the accident for example in traffic accident between the vehicle and pedestrian.

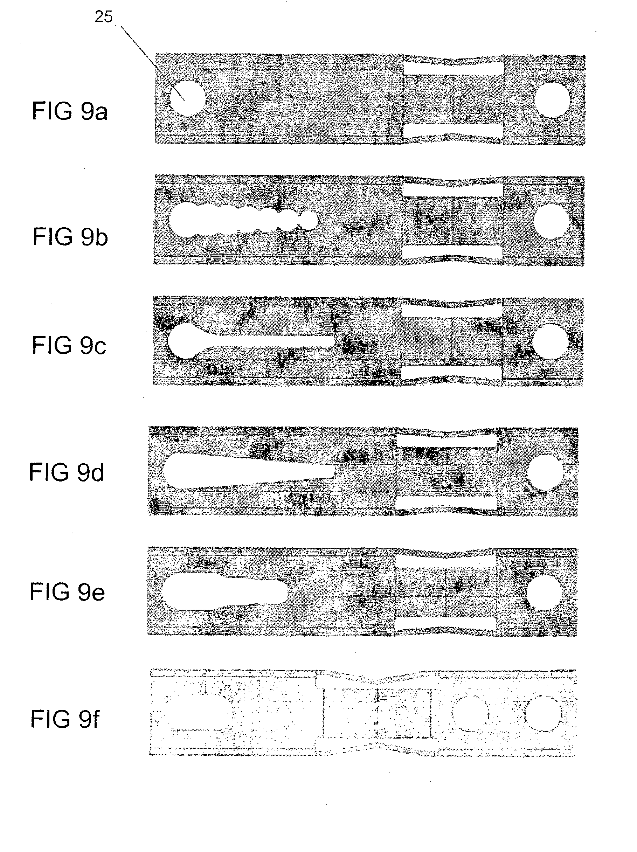

The Fig. 9a to 9f show the different embodiments of the opening 25 for the fixing elements to connect the frontal protection system and vehicle body or connecting holder with the mounting bracket (fig 4). The embodiments enable to adjust the connection between the mounting bracket and vehicle body (connecting holder) in a proper and tight way.

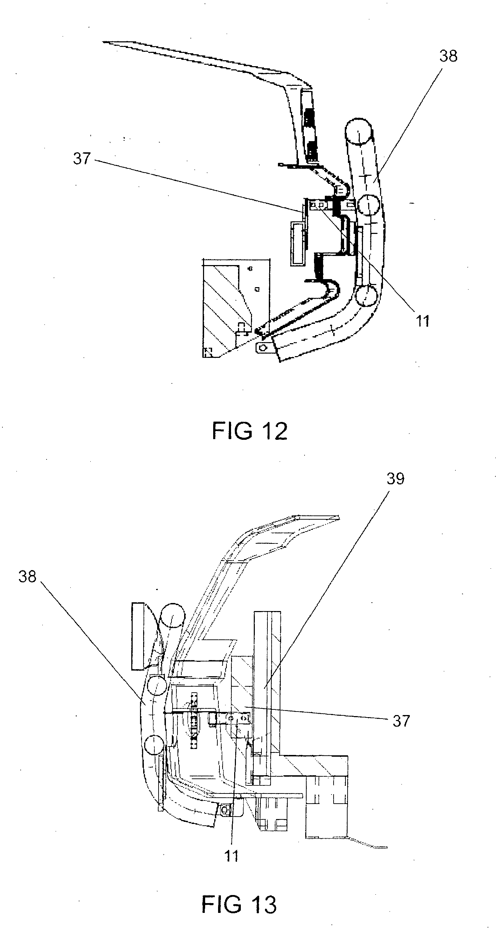

The Fig 10 to Fig 13 illustrates the different possibilities to connect the mounting bracket 11 according to the invention (see fig 4) with the frontal protecting system 38 and vehicle 39. It is possible to connect the mounting bracket directly to the vehicle body by lengthening the bracket body. Also every different vehicle needs in this case the mounting bracket 11 with different length. To unify the mounting bracket the authors of the present invention suggest to use between the mounting bracket and vehicle body an additional connecting holder (shown in Fig 10, 11) 37, which is fixed firmly to the vehicle body. The mounting bracket 11 is then connected to said connecting holder which enables to use mounting bracket 11 with the same length with the different vehicles.

The mounting bracket 11 in the preferred embodiment (Fig. 4) will be cut out from the sheet of metal for example by stamping or cutting. Simultaneously with the cutting of the bracket body 20 is also formed the cut-outs in the whole extent of the absorbing portion 44. Further the blank of the bracket body is bent so that the U-shaped body is formed and there will be provided three deforming elements. When the U-shaped body is formed also the deforming element will be inclined in the pre determined direction, either the lower deforming element will be inclined outwardly in the plane of the bracket and the lateral deforming element will be inclined inwardly or contrarily as mentioned below.

When mounting the frontal protection system 38 to the vehicle 39 the connecting holder 37, which corresponds to the vehicle type, is fixed to the vehicle body. The lower part of the frontal protection system will be fixed to the vehicle body with the conventional manner for example with the S-shaped holder. Thereafter the mounting bracket 11 will be connected with the connecting holder 37 in the one end and with the other end to the middle or upper part of the frontal protection system. Generally the height of the mounting bracket 11 from the ground depend basically from the requirement introduced to the different vehicle types and from the safety regulations specified to the frontal protection system 38 in case of the traffic accident, especially accidents with the pedestrians.

It is evident to the person skilled in the art that furthermore combinations of the represented mounting bracket 1, 11 forms within the scope of the present invention as defined in the appended claims are possible.

## Claims

1. A mounting bracket (1, 11) for mounting the frontal protection system to the vehicle body, the mounting bracket comprises a body (20) including fastening portions (32, 33) respectively provided with openings (25, 26) and an absorbing portion (44) extending between the fastening portions (32, 33) and comprising deforming elements (52, 53, 54), the mounting bracket body (20) comprises a bracket base (27) and bracket sidewalls (28, 29) extending upwardly from said bracket base (27) and formed along the whole extent of the bracket (11) length, whereas the sidewalls (28, 29) are perpendicular with the bracket base (27) to form U-shape body (20) **characterized in that**
the absorbing portion (44) comprises a lower deforming element (53) inclined from the centre outwardly from the bracket in relation to the plane of the bracket base (27) and lateral deforming elements (52, 54) extending between the fastening portions (32, 33) and formed by cut-outs (14, 15) in the bracket sidewalls (28, 29).

2. The mounting bracket according to claim 1 **characterized by** that the lateral deforming elements (52, 54) are inclined from the centre inwardly in relation of the bracket sidewalls (28, 29).

3. The mounting bracket according to the claim 2 **characterized by** that the lower deforming element (53) is inclined from centre inwardly from the bracket in relation to the plane of the bracket base (27).

## Patentansprüche

1. Eine Halterung (1, 11) für die Montage des frontseitigen Schutzsystems an die Karosserie, die Halterung umfasst einen Hauptteil (20) einschließlich eines Befestigungsabschnittes (32, 33), der jeweils mit Öffnungen (25, 26) versehen ist, und eines absorbierenden Teils (44), der sich zwischen den Befestigungsabschnitten (32, 33) befindet und Formelemente (52, 53, 54) beinhaltet; der Hauptteil der Halterung (20) besteht aus einem Halterungsfundament (27) und Halterungsseitenwänden (28, 29), die sich vom besagten Halterungsfundament (27) aufwärts erstrecken und sich über die gesamte Länge der Halterung ziehen (11), wobei die Seitenwände (28, 29) senkrecht zum Halterungsfundament (27) stehen, um einen U-förmigen Aufbau (20) zu bilden, **dadurch gekennzeichnet,**
**dass** der absorbierende Teil (44) aus einem niedrigeren Formelement (53) besteht, das vom Zentrum nach außen hin geneigt ist, von der Halterung im Verhältnis zur ebenen Fläche des Halterungsfundaments (27) betrachtet, sowie aus seitlichen Formelementen (52, 54) besteht, die sich zwischen den Befestigungsteilen (32, 33) befinden und durch Ausstanzungen (14, 15) in den Seitenwänden der Halterung (28, 29) geformt werden.

2. Die Halterung nach Anspruch 1 ist **dadurch gekennzeichnet, dass** die seitlichen Formteile (52, 54), vom Zentrum aus im Verhältnis zu den Halterungsseitenwänden (28, 29) gesehen, nach innen geneigt sind.

3. Die Halterung nach Anspruch 2 ist **dadurch gekennzeichnet, dass** die niedrigeren Formteile (53), vom Zentrum aus im Verhältnis zur ebenen Fläche des Halterungsfundaments (27) gesehen, nach innen geneigt sind.

## Revendications

1. Un support de montage (1, 11) pour monter un système de protection frontale sur la caisse du véhicule, ledit support comportant un corps (20) qui comprend des parties d'attache (32, 33), munies respectivement des ouvertures (25, 26) et d'une partie absorbante (44) s'étendant entre les parties d'attache (32, 33), ainsi que des éléments déformants (52, 53, 54), ledit corps du support (20) comportant une base du support (27) et les parois latérales du support (28, 29) qui s'étendent vers le haut à partir de la base du support (27) et sont formées sur toute la longueur du support (11), alors que les parois latérales (28, 29) sont pérpendiculaires avec la base du support (27), pour obtenir un corps en forme d'un U (20) **caractérisé en ce que**
la partie absorbante (44) comprend un élément déformant inférieur (53) incliné depuis le centre du support vers l'extérieur par rapport au plan de la base du support (27) et les éléments déformants latéraux (52, 54) s'étendant entre les parties d'attache (32, 33) et réalisés par des découpes (14, 15) dans les parois latérales (28, 29) du support.

2. Support de montage selon la revendication 1 **caractérisé en ce que** les éléments déformants latéraux (52, 54) sont inclinés depuis le centre du support vers l'intérieur par rapport aux parois latérales (28, 29) du support.

3. Support de montage selon la revendication 2 **caractérisé en ce que** ledit élément déformant inférieur (53) est incliné depuis le centre du support vers l'intérieur par rapport de la base du support (27).
